# EUROPEAN PATENT SPECIFICATION

(11) **EP 0 726 631 B1**
(45) Date of publication and mention of the grant of the patent: **17.09.2003**
(21) Application number: 96830053.3
(22) Date of filing: 07.02.1996
(51) Int. Cl.: H02G 3/18

(54) **Floor junction box for holding electric and telephonic apparatus**
Unterflurdose für elektrische und telephonische Geräte
Boîte de jonction pour sol, pour appareils électriques et téléphoniques

(30) Priority: 08.02.1995 IT MI950080 U
(43) Date of publication of application: 14.08.1996
(73) Proprietor: CANALPLAST S.P.A., 20051 Limbiate (Milano) (IT)
(72) Inventor: Villi, Pier Giorgio, 20051 - Limbiate (Milano) (IT)
(74) Representative: Cicogna, Franco

(56) References cited:
- EP-A- 0 410 588
- GB-A- 2 241 389
- GB-A- 2 249 880

## Description

### BACKGROUND OF THE INVENTION

The present invention relates to a junction box, to be arranged on a floor and provided for holding herein electric, telephonic, EDP apparatus, and the like.

Floor junction boxes, for electric systems, telephonic or EDP systems, and the like, or boxes for housing therein apparatus such as receptacles and switches, or other coupling components, are already known.

The prior floor junction boxes have conventionally a substantially parallelepipedal configuration, with an openable cover arranged on their top portion.

These prior junction boxes, however, have a very reduced holding capability, because of their construction which prevent the side faces from being fully exploited, for supporting the above mentioned apparatus, and because of a reduced inlet capability for the several utilizer connection cables.

The document GB 2 249 880 discloses a junction box according to the preamble of claim 1.

### SUMMARY OF THE INVENTION

Accordingly, the aim of the present invention is to overcome the above mentioned drawback, by providing a floor junction box, which is so designed as to allow an optimum use of the available space, in order to fit a very great number of utilizer units and to hold several apparatus, both of an electric type and of a telephonic or EDP type, so as to meet very different use requirements.

Within the scope of the above mentioned aim, a main object of the present invention is to provide such a floor junction box which is specifically designed for providing a very great safety both against a possible crushing of the coupling cables and against a possible disengaging thereof, and which, moreover, is very reliable in operation.

Yet another object of the present invention is to provide such a junction box which can be installed in a very simple and quick manner, and can be made at a cost which is very competitive with respect to that of similar junction boxes which are at present available.

According to one aspect of the present invention, the above mentioned aim and objects, as well as yet other objects, which will become more apparent hereinafter, are achieved by a junction box, according to claim 1.

Along at least two opposite sides of the cover are provided inlet passages for allowing utilizer unit cables to be introduced into the main body.

On the side faces of the box-like body, moreover, are provided breakable perforations, for the inlet of connection cables for coupling the lines to the utilizer units to be connected.

Inside the main box-like body, along the four side faces thereof, are provided recesses for holding therein telephonic, electric, EDP receptacles, or switches, or other electric, telephonic, EDP components and the like.

### BRIEF DESCRIPTION OF THE DRAWINGS

Further characteristics and advantages of the invention will become more apparent hereinafter from the following detailed disclosure of a junction-box according to the present invention, which is illustrated, by way of an indicative, but not limitative, example, in the accompanying drawings, where:

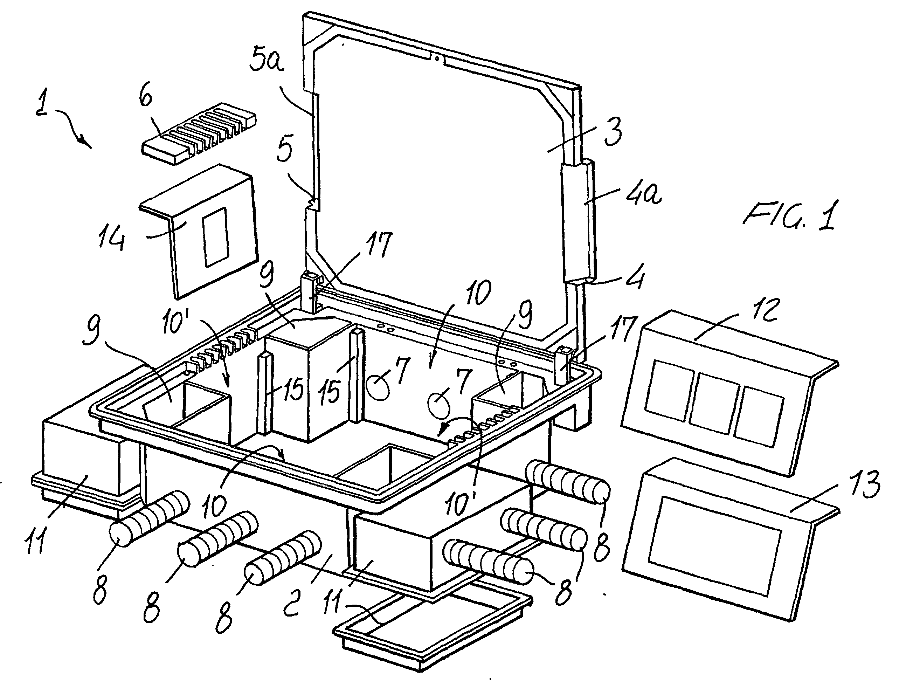

Figure 1 is an exploded perspective view illustrating the junction box according to the present invention; and

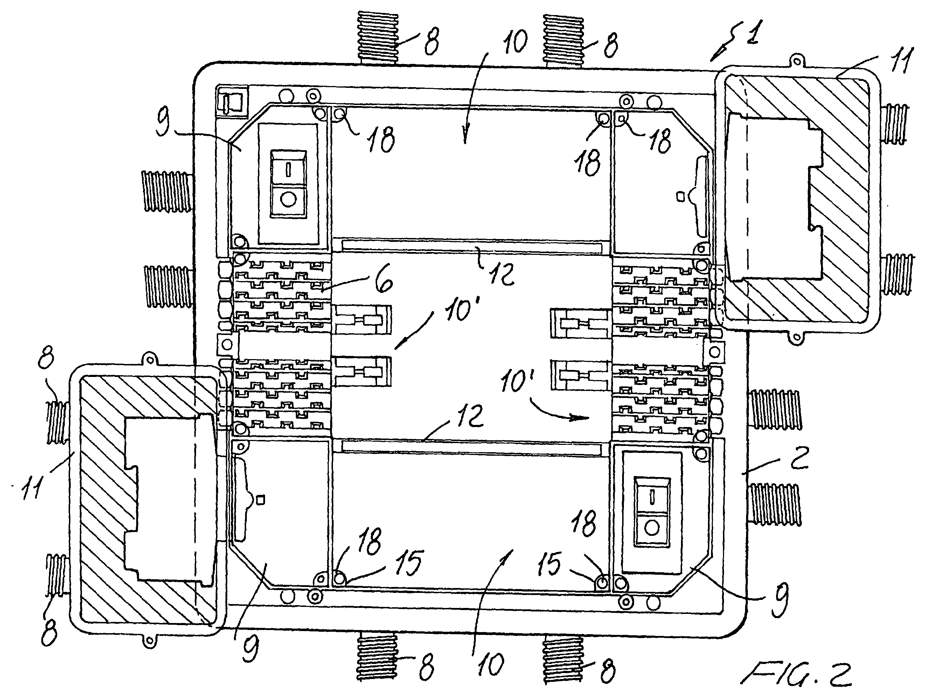

Figure 2 is a top plan view of the junction box according to the present invention, from which, for a better clearness, the cover has been removed.

### DESCRIPTION OF THE PREFERRED EMBODIMENT

With reference to the number references of the above mentioned figures, the junction box according to the present invention, which has been indicated generally by the reference number 1, comprises a main box-like body 2, which has a substantially parallelepipedal configuration and has an open top or base.

Along a side of the top portion of the cover 2, is pivoted a closing cover 3, which is provided, along at least two of its opposite sides, with inlet passages 4 and 5 allowing corresponding cables of utilizer units to be introduced into the body 2.

In order to protect these cables from crushing, the cover 3 is moreover provided, at said passages 4 and 5, with small lids 4a and 5a.

Furthermore, at the regions of the body 2 involved by the mentioned passages 4 and 5, is provided a respective throughgoing cable-detent element 6, which is associated with said body 2, so as to prevent the utilizer unit cables from being accidentally disengaged; this cable-detent element 6, moreover, prevents the cables from being crushed even if the cover 3 is closed with the cable in a not proper position.

On the side walls of the body 2 are provided breakable perforations 7 which can be pierced or broken for allowing the cables 8 of the lines to which the utilizer units must be coupled to be introduced into the body 2.

Along the four side walls holding recesses are provided inside the body 2 for holding therein telephonic, electric, EDP receptacles, as well as switches or other electric, telephonic or EDP components.

More specifically, at the four side corners of the body 2, are provided recesses 9 for holding therein telephonic receptacles, or automatic switches, for protecting the electric receptacles arranged in the body 2.

At a middle region of the side walls of the body 2 are provided holding recesses 10, for holding herein electric receptacles, both of a bipolar type and of a Schuko type.

Furthermore, at a middle region of the side walls of the body 2, further recesses 10' can be provided, for holding therein further electric, EDP or telephonic receptacles.

The box according to the invention, if required, can also comprise auxiliary box-like bodies 11, which are laterally associated with the body 2 and are provided with auxiliary outer recesses, for holding therein main switches, of an automatic bi- or threepole type, for protecting receptacles or the like apparatus.

The several apparatus are affixed inside the body 2 by supporting fittings 12, 13, 14 which are associated, for example by means of screws 16, to suitable blocks 15 which are rigid with the side walls and/or with the bottom of the body 2.

The hinges or articulations 17 for coupling the cover 3 to the body 2, are housed inside the body 2, and the closure of the cover 3 is assured by a screw 18.

The body 2 and cover 3 are preferably made of a molded synthetic material.

From the above disclosure and from the observation of the figures of the accompanying drawings, it should be apparent that the invention fully achieves the intended aim and objects.

In particular, the fact is to be pointed out that the junction box according to the present invention, since it exploits all of the side faces and allows the apparatus to be arranged at four vertical positions, with two inlets for the cables and the provision of possible auxiliary box bodies, allows to exploit in an optimum manner the available space for holding therein those apparatus which are necessary for supplying the utilizer units with electric lines, telephonic lines or EDP lines.

Moreover, the junction box according to the present invention, owing to its constructional simplicity, can be made at a very low cost and can be installed in a very simple and quick manner.

A further advantage is that the subject junction box provides a sufficient protection against a possible crushing or disengaging of the utilizer unit cables, and, moreover, it is so designed that the lines entering the box can not be mis-arranged.

In practicing the invention, the used materials, as well as the contingent size and shapes, can be any, depending on requirements.

## Claims

1. A junction box (1), to be arranged on a floor for holding therein electric, telephonic, EDP or the like apparatus, comprising a main box-like body (2), having a substantially parallelepipedal shape, and an open top, as well as a cover (3) pivoted to said main box-like body (2), at the top thereof; at least along two opposite sides of the cover being provided with inlet passages (4, 5) for allowing cables of utilizer units to be coupled to be introduced into said main box-like body (2); on the side faces of said main box-like body (2) being provided breakable perforations (7), for allowing connection cables (8) of lines of said utilizer units to be connected to enter said body (2); inside said main box-like body (2), along the four side faces thereof, being moreover provided with holding recesses (9, 10, 10') for holding therein telephonic, electric, EDP receptacles or switches, or other electric, telephonic, EDP or the like components, **characterized in that** said junction box comprises moreover auxiliary box-like bodies (11), which can be associated with said main box-like body (2) and in auxiliary outer recesses for holding therein main switches, automatic bi- threepole switches and the like, for protecting said receptacles, or like apparatus.

2. A junction box, according to Claim 1, **characterized in that** said holding recesses (9, 10, 10') comprise holding recesses (9) for holding herein telephonic receptacles or switches for protecting said electric receptacles or the like.

3. A junction box, according to Claim 1, **characterized in that** said holding recesses (9, 10, 10') comprise holding recesses (10) for holding herein electric receptacles.

4. A junction box, according to Claim 1, **characterized in that** said holding recesses (9, 10, 10') comprise holding recesses (10') for holding herein telephonic receptacles or EDP receptacles.

5. A junction box, according to Claim 1, **characterized in that** said junction box comprises moreover fittings (12, 13, 14) for supporting apparatus to be housed in said main box-like body, said supporting fittings (12, 13, 14) being removably engageable inside side box-like body.

6. A junction box, according to Claim 1, **characterized in that** said cover (3), at said passages (4, 5), is provided with protecting lids (4a, 5a) for protecting said utilizer unit cables from being crushed.

7. A junction box, according to Claim 1, **characterized in that** said junction box comprises moreover throughgoing cable detent elements (6), which are associated with said main box-like body (2) at the regions involved by said utilizer unit cable passages, to prevent said cables from being disengaged.

8. A junction box, according to Claim 1, **characterized in that** said main box-like body (2) and cover (3) are made of a molded synthetic material.

## Patentansprüche

1. Anschlussdose (1) zur Positionierung auf einem Boden, zur Unterbringung elektrischer, telefonischer, EDV- oder ähnlicher Geräte, mit einem hauptanschlussdosenähnlichen Körper (2), der eine im Wesentlichen parallelepipede Form und ein offenes Oberteil sowie einen an dem Oberteil des hauptanschlussdosenähnlichen Körpers (2) schwenkbar gelagerten Deckel (3) aufweist; wobei mindestens entlang zwei einander gegenüberliegender Seiten des Deckels Einlassdurchgänge (4,5) vorgesehen sind, um das Einführen von Kabeln anzuschließender Nutzereinheiten in den hauptanschlussdosenähnlichen Körper (2) zu ermöglichen; wobei auf den Seitenflächen des hauptanschlussdosenähnlichen Körpers (2) Sollbruch-Perforationen (7) vorgesehen sind, um das Eintreten von Anschlusskabeln (8) von Leitungen anzuschließender Nutzereinheiten in den Körper (2) zu ermöglichen; wobei innerhalb des hauptanschlussdosenähnlichen Körpers (2) entlang der vier Seitenflächen desselben darüber hinaus Unterbringungsaussparungen (9, 10, 10') zur Unterbringung telefonischer, elektrischer, EDV-Steckdosen oder ähnlicher Komponenten vorgesehen sind,
**dadurch gekennzeichnet, dass**
die Anschlussdose darüber hinaus zusätzliche kastenähnliche Körper (11) aufweist, die mit dem hauptanschlussdosenähnlichen Körper (2) und in zusätzlichen äußeren Aussparungen verbunden werden können, um darin Hauptschalter, automatische zwei/dreipolige Schalter und dergleichen zum Schutz der Dosen oder ähnlicher Vorrichtungen unterzubringen.

2. Anschlussdose nach Anspruch 1,
**dadurch gekennzeichnet, dass**
die Unterbringungsaussparungen (9,10,10') Unterbringungsaussparungen (9) zur Unterbringung von Telefonsteckdosen oder -schaltern zum Schutz der elektrischen Steckdosen umfassen.

3. Anschlussdose nach Anspruch 1,
**dadurch gekennzeichnet, dass**
die Unterbringungsaussparungen (9,10,10') Unterbringungsaussparungen (10) zur Unterbringung elektrischer Steckdosen umfassen.

4. Anschlussdose nach Anspruch 1,
**dadurch gekennzeichnet, dass**
die Unterbringungsaussparungen (9,10,10') Unterbringungsaussparungen (10') zur Unterbringung von Telefonsteckdosen oder EDV-Steckdosen umfassen.

5. Anschlussdose nach Anspruch 1,
**dadurch gekennzeichnet, dass**
die Anschlussdose darüber hinaus Anschlussteile (12,13,14) zum Tragen von in dem hauptanschlussdosenähnlichen Körper unterzubringenden Vorrichtungen aufweist, wobei die tragenden Anschlussteile (12, 13, 14) innerhalb des kastenähnlichen Körpers lösbar in Eingriff bringbar sind.

6. Anschlussdose nach Anspruch 1,
**dadurch gekennzeichnet, dass**
der Deckel (3) an den Durchgängen (4,5) mit Schutzdeckeln (4a,5a) versehen ist, um die Kabel von Nutzereinheiten gegen Druck zu schützen.

7. Anschlussdose nach Anspruch 1,
**dadurch gekennzeichnet, dass**
die Anschlussdose darüber hinaus durchgehende Kabelarretierungselemente (6) aufweist, die mit dem hauptanschlussdosenähnlichen Körper (2) in den Bereichen mit den Kabeldurchgängen der Nutzereinheiten verbunden sind, um ein Außereingriffbringen der Kabel zu verhindern.

8. Anschlussdose nach Anspruch 1,
**dadurch gekennzeichnet, dass**
der hauptanschlussdosenähnliche Körper (2) und der Deckel (3) aus einem gegossenen Kunststoff hergestellt sind.

## Revendications

1. Boîte de jonction (1), à disposer sur un sol pour contenir des dispositifs électriques, téléphoniques, de traitement électronique de données (EDP), ou semblables, présentant une forme sensiblement de parallélépipède, et un sommet ouvert, ainsi qu'un couvercle (3) pivotant par rapport audit corps principal do type boîte (2), au sommet de celui-ci ; au moins le long de deux côtés opposés du couvercle étant prévus deux passages d'entrée (4, 5) afin de permettre aux câblée destinés au composant utilisé d'être couplés afin d'être introduits à l'intérieur dudit corps principal de type boîte (2) ; sur les faces de côtés dudit corps principal de type boîte (2) étant prévues des perforations (7) cassantes, afin de permettre aux câbles de connexion (8) des lignes desdits composants utilisés d'être connectées pour entrer dans ledit corps (2) ; à l'intérieur dudit corps principal de type boîte (2), le long des quatre faces de côté de celui-ci, étant de plus prévues des cavités de maintien (9,10, 10') afin de contenir des interrupteurs ou réceptacles téléphoniques, électriques, EDP, ou d'autres composants électriques, téléphoniques, EDP, ou semblables, **caractérisée en ce que** ladite boîte de jonction comprend de plus des corps auxiliaires de type boîte (11), qui peuvent être associés avec ledit corps principal de type boîte (2) et dans des cavités externes auxiliaires afin de contenir des interrupteurs principaux, des interrupteurs bi-tripolaires (« bi-threepole switches ») et semblables, pour protéger lesdits réceptacles, ou dispositifs semblables.

2. Boîte de jonction, selon la revendication 1, **caractérisée en ce que** lesdites cavités de maintien (9, 10, 10') comprennent des cavités de maintien (9) pour contenir des interrupteurs ou réceptacles tétéphoniques afin de protéger lesdits réceptacles électriques ou semblables.

3. Boîte de jonction, selon la revendication 1, **caractérisée en ce que** lesdites cavités de maintien (9, 10, 10') comprennent des cavités de maintien (10) pour contenir des réceptacles électriques.

4. Boîte de jonction, selon la revendication 1, **caractérisée en ce que** lesdites cavités de maintien (9, 10, 10') comprennent des cavités de maintien (10') pour contenir des réceptacles téléphoniques ou des réceptacles EDP.

5. Boîte de jonction, selon la revendication 1, **caractérisée en ce que** ladite boîte de jonction comprend de plus des éléments de raccords (12, 13, 14) pour supporter le dispositif à loger dans ledit corps principal de type boîte (2), lesdits éléments de raccords (12, 13, 14) de support étant engageables de manière amovible à l'intérieur du corps de type boîte de côté.

6. Boîte de jonction, selon la revendication 1, **caractérisée en ce que** ledit couvercle (3), au niveau desdits passages (4, 5), est muni de rebords (1a, 5a) afin d'empêcher que lesdits câbles destinés au composant utilisé ne soient écrasés.

7. Boite de jonction, selon la revendication 1, **caractérisée en ce que** ladite boîte de jonction comprend de plus des éléments d'arrêt de câbles transversaux (6), qui sont associés audit corps principal de type boîte (2) au niveau des régions concernées par lesdits passages de câbles destinés au composant utilisé afin d'éviter que lesdits câbles ne soient désengagés.

8. Boîte de jonction, selon la revendication 1, **caractérisée en ce que** le corps principal de type boîte (2) et le couvercle (3) sont fabriqués en un matériau synthétique moulé.
